# EUROPEAN PATENT SPECIFICATION

(11) **EP 4 044 560 B1**
(45) Date of publication and mention of the grant of the patent: **02.07.2025**
(21) Application number: 21171953.9
(22) Date of filing: 04.05.2021
(51) Int. Cl.: H04L 67/12, H04L 69/08, H04L 67/565

(54) **SENSOR HUB**
SENSOR-HUB
MOYEU DE CAPTEUR

(30) Priority: 16.02.2021 US 202163149860 P
(43) Date of publication of application: 17.08.2022
(73) Proprietor: Hengstler GmbH, 78554 Aldingen (DE)
(72) Inventor: LINDEN, Martin, 78166 Donaueschingen (DE); TITZE, Nicolas, 78661 Dietingen (DE); HAUSER, Nico, 78549 Spaichingen (DE)
(74) Representative: Riebling, Peter

(56) References cited:
- WO-A1-2019/155700
- US-A1- 2019 036 731

## Description

The present invention relates to the field of servo motor assemblies and in particular to a sensor hub as an open platform to connect any possible kind of sensor to a known type of connection between a position sensor and a master device as part of a servo motor assembly.

An approach to provide motor diagnostics and analytics is described in EP 3 462 138 A1 (Rockwell Automation Technologies) "Board mounted microelectromechanical system (MEMS) sensors for motor diagnostics and analytics." However, it is limited to the description of the used sensors and the place of mounting within a servo motor and does not describe a communication with a master.

Another solution to provide vibration data acquired within a servo motor is described in product information document "EDS/EDM35, sHub Motor feedback system rotary HIPERFACE DSL^{®}" from company Sick AG. (Part number: 8023528). This document describes a condition monitoring system, where a vibration sensor is placed close to the encoder and uses Hiperface DSL protocol as the encoder to communicate with a common master, which is in this case the motor drive. A drawback of this solution is that this closed architecture only allows specific encoders and specific sensors. The number of external sensors is limited by 2. It cannot be scaled to the requirements of individual system solutions.

WO 2019/155700 A1 discloses a sensor hub open platform according to the preamble of claim 1.

US 2019 / 0 036 731 A1 discloses a method for digital, bidirectional data transmission between a position measuring system and a motor control system and/or an evaluation unit based on the transmission of frames of a predefined bit length in chronologically sequential time slots.

It is the object of the present invention to propose a sensor hub as an open platform and part of a servo motor assembly for operating a flexible combination of different kind of sensors, using existing cabling and having a small footprint, which allows integration within existing machines and/or a very compact and easy system integration for applications with limited space.

The object of invention is achieved by providing sensor hub according to claim 1. Preferred embodiments and features of the invention are addressed in the subclaims.

Embodiments of the present invention provide a sensor hub in form of a computing device to connect one or several sensors to acquire, process or convert sensor data and to connect to a master device which requests and processes this sensor data. The master device can be an independent device or can be integrated within a position sensor control device or motor drive of a servo motor assembly. Preferably, a single cable is used to connect the master device with the sensor hub.

In some embodiments of the invention, the communication signal from the sensor hub to the master device is preferably transmitted and modulated on the supply voltage lines. In principle, the digital data can be transmitted by any known modulation method, for example amplitude, frequency or phase modulation of a carrier frequency.

In some embodiments of the invention, a communication method such as described in Patent EP 3 439 245 B1 is used.

In some embodiments of the invention, the sensor hub may be implemented in an existing cable infrastructure, which is very advantageous to extend the condition monitoring and predictive maintenance capabilities of existing machines (i.e. retrofitted), by using preferably existing power supply lines for communication to minimize effort of cabling, connectors and footprint and system complexity to attach any kind of sensors within or nearby the attached sensor hub device, e.g. within or around a motor, gearbox or a machine close to this motor.

In some embodiments of the invention, the sensor hub communicates with the master device by using a RS485 interface or other similar communication standards to maximize bandwidth and to minimize cost by using standard RS485 line drivers and standard microcontrollers. Such a device has a very small footprint to provide flexibility in mounting positions and therefore enables a various mounting location of the sensor hub and the attached sensors within or close to the point of interest. Using standard line drivers and standard microcontrollers enables a high temperature range compared to FPGA based solutions. The power line modulation is realized by preferably using passive electronic components. A wide input supply range is realized by a suitable switching regulator.

In preferred embodiments of the present invention, the communication protocol described in EP 3 439 245 B1 is used for communication between the sensor hub and the master device. This communication protocol advantageously supports real time requirements. Data acquired by the sensors can be synchronized to ease data processing and analytics. For example, acquisition of vibration sensor data from the sensor hub can easily be latched at the same time as the position data from a feedback sensor or encoder which is parallel attached to the sensor hub on the same wires.

This concept allows a synchronization to a motor control cycle in single hybrid cable solutions, where switching insulated-gate bipolar transistors (IGBTs) lead to noise peaks on the communication wires. The communication can therefore be realized within the noise free time gaps between two IGBT switching events to avoid communication errors.

### Advantages of the present invention

The feedback encoder of the servo motor is supplied with electric current via electric supply lines and communicates with the master device, e.g. a motor controller, via an encoder data line. The supply voltage is always present everywhere in the servo motor assembly. The sensor hub communicates with the master device preferably via the common voltage supply line of the encoder. The data signals of the sensor hub are modulated onto the voltage supply line and can be received from the master device.

Any type of sensor can be connected to the sensor hub. For this purpose, the sensor hub provides several digital and/or analog standard interface to connect the sensors. The sensor hub converts the sensor signals into the protocol used for communication with the master device and transmits the signals to the master device, preferably by modulating the data signals onto the power supply line.

Embodiments of the invention advantageously provide a method enabling a condition monitoring and predictive maintenance of motors, gears and machines by using a single cable solution and a flexible open architecture to minimize installation effort, installation cost and to maximize flexibility to use multiple amount and type of sensors and to provide the possibility for system integration with high bandwidth and real time capabilities.

The various embodiments of the present invention provide for a flexible combination of different kind of sensors, using existing cabling and having a small footprint, which allows integration within existing machines (retrofit) or a very compact and easy system integration for applications with limited space e.g. robots. They allow synchronous real time data acquisition of multiple sensors, which enables additional use cases and increases the value of the acquired data. The computing capabilities within the sensor hub and the master device allow edge computing to pre-evaluate the acquired data to perform condition monitoring and predictive maintenance tasks. The master device can also be connected to internal or internet-based cloud applications to enable connectivity to a broader network, e.g. to calculate condition monitoring or predictive maintenance algorithms and to communicate with other connected devices (e.g. PLC etc.). It is also possible to integrate the master to a motor drive to increase the system integration density.

Preferred embodiments of the invention, from which further inventive features result, are shown in the accompanying drawings. The shown embodiments are not meant to be limiting, but rather are examples of various possible embodiments of the present invention.
- Fig. 1: shows a schematic drawing of the sensor hub embedded in a servo motor assembly according to a first embodiment of invention.
- Fig. 2: shows a schematic drawing of the sensor hub embedded in a servo motor assembly according to a second embodiment of invention.
- Fig. 3: shows a schematic drawing of the sensor hub embedded in a servo motor assembly according to a third embodiment of invention.
- Fig. 4: shows a schematic drawing of the sensor hub embedded in a servo motor assembly according to a fourth embodiment of invention.
- Fig. 5: shows a schematic drawing of the sensor hub embedded in a servo motor assembly according to a fifth embodiment of invention.
- Fig. 6: shows a schematic drawing of the sensor hub embedded on a printed circuit board of a servo motor assembly.

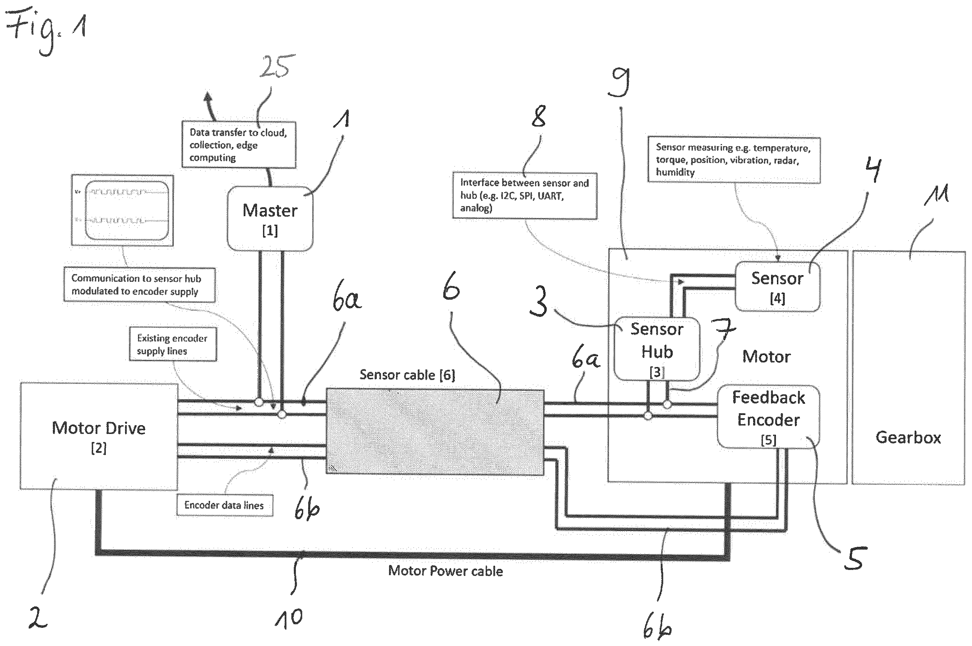

Figure 1 shows a preferred embodiment of the invention, wherein the sensor hub 3 operates as a condition monitoring system using existing sensor cables 6 to communicate with a master device 1.

The master device 1 and the sensor hub 3 communicate over existing power supply lines 6a provided by a servo motor drive 2 to power a servo motor feedback encoder 5 of a servo motor 9. The sensor hub 3 is connected via a communication interface 7 to the power supply lines 6a. The communication between the sensor hub 3 and the master device 1 is modulated over these power supply lines 6a, without interfering with the functionality of the servo motor feedback system. The motor 9 is powered by the motor drive 2 by a separate motor power cable 10. A gearbox 11 is attached to the motor 9.

The servo motor feedback encoder 5 communicates with the motor drive 2 over separate encoder data lines 6b which are part of the sensor cable 6. At least one sensor 4, e.g. a vibration sensor, is connected to the sensor hub 3 via an interface 8, for example I2C, SPI, UART or analog interface. Additional sensors 4 for measuring temperature, torque, position, radar, humidity, etc., can be connected to the sensor hub 3. The master device 1 requests the sensor data from the sensor hub 3 and in some embodiments can be used as an edge device to perform condition monitoring and predictive maintenance calculations and can also be connected to a device-based or internet-based cloud application 25. With this solution, a condition monitoring system can easily be realized on existing machines, by using existing cables and connectors.

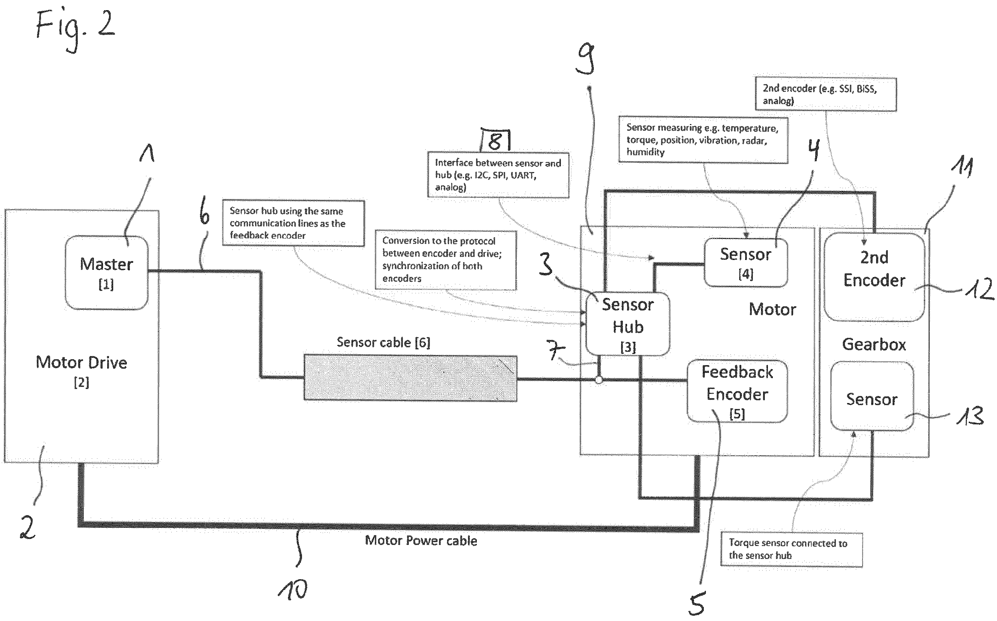

Figure 2 shows a preferred embodiment of the invention, wherein the sensor hub 3 is used as a protocol converter for sensor data of the connected sensors 4, 13 and data of the second encoder 12. The basic configuration is similar to Figure 1.

The sensor hub 3 is connected via the communication interface 7 in parallel with the motor feedback encoder 5, and both communicate over a sensor cable 6 with the master device 1 on request. There is a second encoder 12 and a torque sensor 13 attached to the motor and/or gearbox 11, and both are connected to the sensor hub 3 using state of the art protocols, e.g. BiSS, SSI, or providing analog signals, e.g. A, B, Z. The sensor hub 3 acquires the data from the second encoder 12 and the sensor 13, which could be a torque sensor, on request of the master device 2, synchronized to the request of the first motor feedback encoder 5. The sensors 4, 13 and encoder 12 can be connected to the sensor hub for example via I2C, SPI, UART interface or analog interface, and the sensor hub 3 converts the data from the different sensors 4, 12 and 13 and encoder 12 to the protocol used for communication between the sensor hub 3 and the master device 1. This can be a RS485 protocol or a communication protocol described in EP 3 439 245 B1. By means of the sensor hub 3 multiple standard sensors 4, 12 and 13 can be connected to a single-cable system. The master device 1 may be an external device or may be integrated into the motor drive 2.

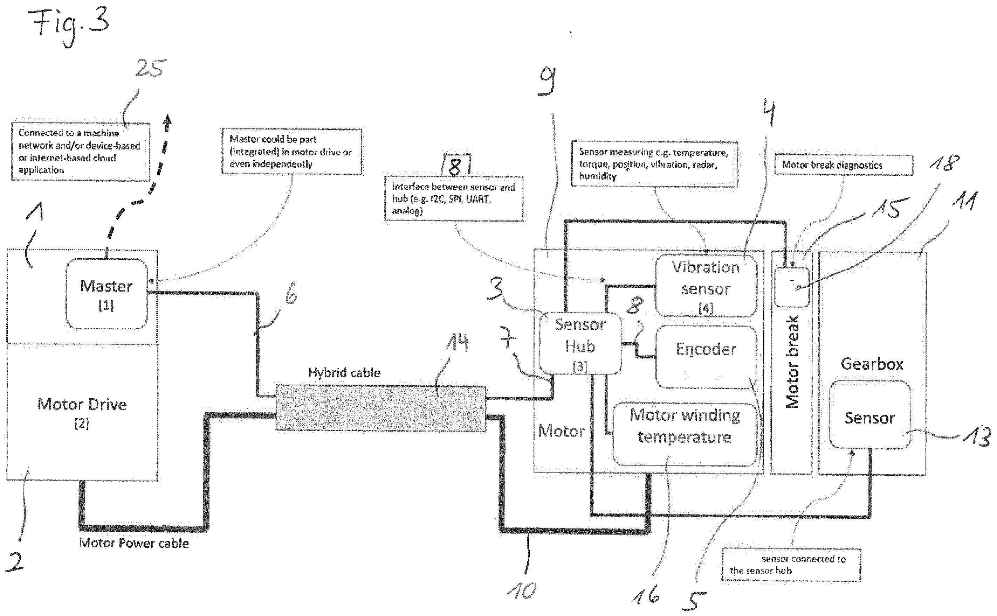

Figure 3 shows a preferred embodiment of the invention, wherein the sensor hub 3 is used for condition monitoring of several sensors or diagnostic systems.

Multiple sensors, e.g. an encoder 5, a motor winding temperature sensor 16, a sensor 4, which can be a shock sensor and a sensor 17, which can be a shock and vibration sensor and a motor break diagnostic system 18 for a motor break 15 are connected to the sensor hub 3 via known interfaces such as I2C, SPI, UART or an analog interface. The sensors 4, 5, 16, 17 and 18 are located at the motor 9 and/or the motor break 15 and/or the gearbox 11. The sensor hub 3 converts the data received from the different sensors 4, 5, 16, 17 and 18 to the protocol used for communication between the sensor hub 3 and the master device 1. The sensor hub 3 is connected by means of a communication interface 7 directly to the master device 1 via a single hybrid cable 14 which includes data lines 6 for data transmission and a motor power cable 10 from the servo motor drive 2 to the motor 9. The master device 1 can be integrated within the servo motor drive 2 or can be placed independently and connected to a machine network and/or a device-based or internet-based cloud application 25. The invention enables a high data bandwidth, which allows real time motor control, based on multiple encoders, temperature data and torque data to optimize overall machine efficiency.

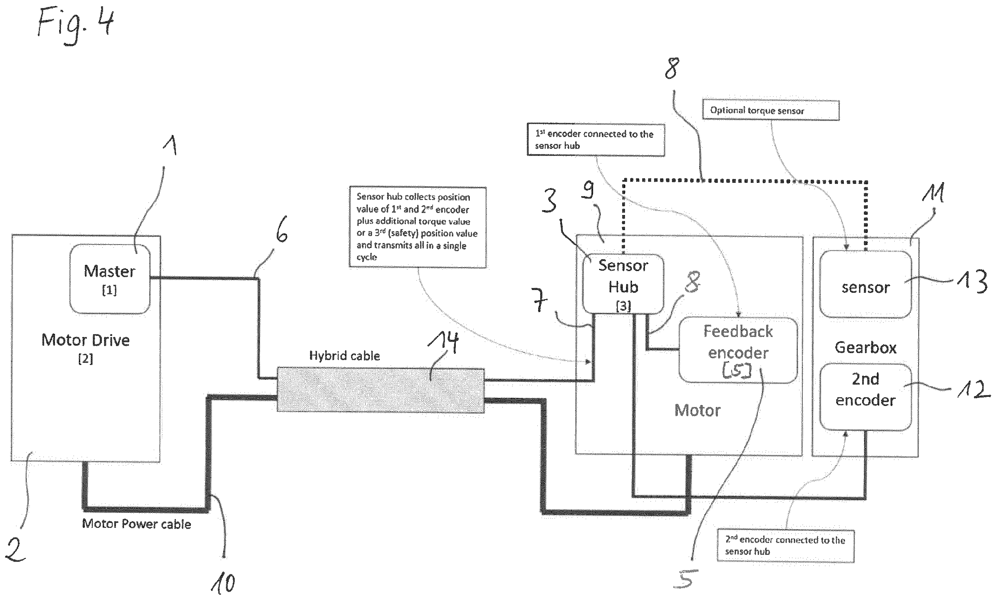

Figure 4 shows a preferred embodiment of the invention, wherein the sensor hub 3 is used for building a synchronized multi encoder communication with the master device 1.

The sensor hub 3 allows a system setup with multiple encoders 5, 12 and a sensor 13, which can be a torque sensor connected to the sensor hub 3. The sensor hub 3 is connected via a communication interface 7 to the sensor cable 6 and enables data transmission to the master device 1 for position data of the first encoder 5 and the second encoder 12 and from a sensor 13 or a third encoder in a single motor control cycle. A fast data transmission, low overhead and dual channel data can be used for absolute safe position detection.

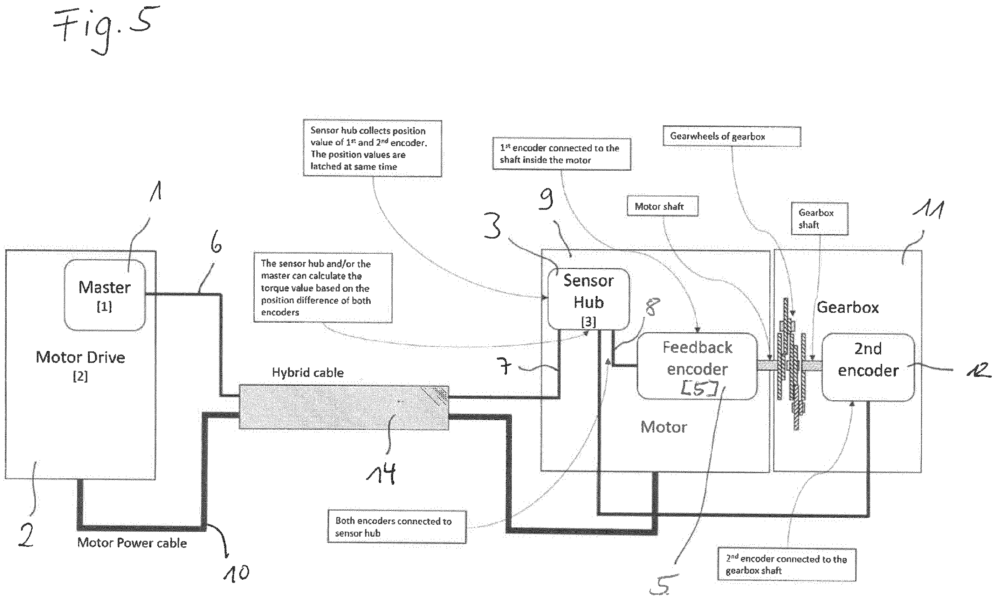

Figure 5 shows a preferred embodiment of the invention, wherein the sensor hub 3 is used for sensor fusion.

The sensor hub 3 is connected to several encoders 5, 12 and allows a system setup with the encoders 5, 12 to enable data transmission for position data of the first encoder 5, placed on a drive shaft, and position data of a second encoder 12 placed on the load shaft of a gear box 11. The position data of both encoders 5, 12 are latched at the same time via the sensor hub 3. The sensor hub 3 is connected via the communication interface 7 directly to the sensor cable 6. The sensor hub 3 and/or the master device 1 can calculate the torque value based on differences of the received position data of the encoders 5, 12 and can detect abnormalities to provide condition monitoring or predictive maintenance information.

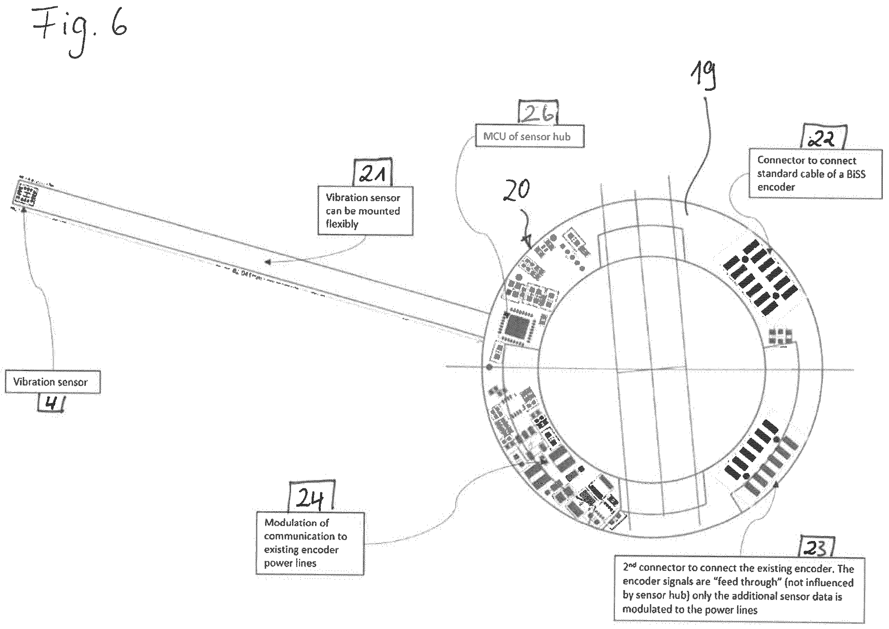

Figure 6 shows a schematic drawing of the sensor hub embedded on a printed circuit board 19 of a servo motor assembly. The printed circuit board 19 is for example ring-shaped to be embedded at the back or front of a servo motor. On the printed circuit board are the electronic components 20 of the sensor hub, including a computing device 26 in form of a microcontroller unit (MCU), a (flexible) connector 21 for connecting a vibration sensor 4, additional connectors 22, 23 for connecting various sensors and encoders to the sensor hub and electronic components 24 forming a communication interface for communication with the master device over the electric power lines or data lines.

### List of reference numerals

- 1: master device
- 2: motor drive
- 3: sensor hub
- 4: sensor
- 5: motor feedback encoder
- 6: sensor cable
- 7: communication interface
- 8: sensor interface
- 9: motor
- 10: motor power cable
- 11: gearbox
- 12: second encoder
- 13: sensor
- 14: hybrid cable
- 15: motor break
- 16: temperature sensor
- 18: motor break diagnostics
- 19: printed circuit board
- 20: electronic components (for modulation / demodulation)
- 21: flexible electrical connector
- 22: connector to connect original encoder cable
- 23: second connector to connect feedback encoder
- 24: electronic components
- 25: external application
- 26: computing device

## Claims

1. A sensor hub (3) open platform for a servo motor assembly, comprising
at least one sensor communication interface (8) for communicating with at least one sensor or encoder (4, 12, 16),
a computing device (26) for evaluating and/or processing and/or converting data acquired from the at least one sensor or encoder (4, 12, 16), and
a communication interface (7) for communicating at least with a master device (1), wherein the sensor hub (3) and the master device (1) are connectable via a single cable (6, 14), **characterized in that** the communication interface (7) to the master device (1) is designed to provide a real-time data transmission of position data of a first encoder (5) and additional encoders (12) or data of additional sensors (4, 13) in a single motor control cycle, and wherein the sensor communication interface (8) is designed to provide a synchronous data acquisition of at least one sensor (4, 16) and at least one encoder (5, 12).

2. Sensor hub (3) according to claim 1, **characterized in that** it is connected in parallel with the first encoder (5) via the communication interface (7).

3. Sensor hub (3) according to any of claims 1 or 2, **characterized in that** the communication interface (7) to the master device (1) is designed to provide communication over an existing power supply cable (6a) by means of a known modulation method.

4. Sensor hub (3) according to claim 3, **characterized in that** the modulation method includes amplitude, frequency or phase modulation of a carrier frequency.

5. Sensor hub (3) according to any of claims 1 to 4, **characterized in that** the communication interface (7) to the master device (1) is a RS485 interface.

6. Sensor hub (3) according to any of claims 1 to 5, **characterized in that** the at least one sensor (4, 12, 16) connected to the sensor hub (3) includes one of the following sensors: a shock or vibration sensor, a position sensor (encoder), a torque sensor, a temperature sensor, a motor break system sensor.

7. Sensor hub (3) according to any of claims 1 to 6, **characterized in that** the master device (1) is an independent device or is integrated within a position sensor control device or a motor drive (2) of a servo motor assembly.

8. Sensor hub (3) according to any of claims 1 to 7, **characterized in that** the sensor hub (3) is designed to be retrofitted into an existing servo motor assembly and to be connected to an existing cabling (6, 14).

9. A method for condition monitoring and predictive maintenance of motors, gears and machines by using a sensor hub (3) according to any of claim 1 to 8.

## Patentansprüche

1. Offene Sensor-Hub (3)-Plattform für eine Servomotoranordnung, umfassend
mindestens eine Sensor-Kommunikationsschnittstelle (8) zum Kommunizieren mit mindesten einem Sensor oder Kodierer (4, 12, 16),
ein Rechnergerät (26) zum Auswerten und/oder Verarbeiten und/oder Umwandeln aus dem mindestens einen Sensor oder Kodierer (4, 12, 16) beschaffter Daten, und
eine Kommunikationsschnittstelle (7) zum Kommunizieren mindestens mit einem Master-Gerät (1), wobei der Sensor-Hub (3) und das Master-Gerät (1) über ein einziges Kabel (6, 14) miteinander verbindbar sind,
**dadurch gekennzeichnet, dass** die Kommunikationsschnittstelle (7) zum Master-Gerät (1) dazu ausgelegt ist, eine Echtzeit-Datenübertragung von Positionsdaten eines ersten Kodierers (5) und zusätzlicher Kodierer (12) oder Daten zusätzlicher Sensoren (4, 13) in einem einzigen Motor-Regelungszyklus bereitzustellen, und wobei die Sensor-Kommunikationsschnittstelle (8) dazu ausgelegt ist, eine synchrone Datenbeschaffung mindestens eines Sensors (4, 16) und mindestens eines Kodierers (5, 12) bereitzustellen.

2. Sensor-Hub (3) gemäß Anspruch 1, **dadurch gekennzeichnet, dass** er über die Kommunikationsschnittstelle (7) mit dem ersten Kodierer (5) parallel geschaltet ist.

3. Sensor-Hub (3) gemäß einem der Ansprüche 1 oder 2, **dadurch**
**gekennzeichnet, dass** die Kommunikationsschnittstelle (7) zum Master-Gerät (1) dazu ausgelegt ist, eine Kommunikation mittels eines bekannten Modulationsverfahrens über ein bestehendes Stromversorgungskabel (6a) bereitzustellen.

4. Sensor-Hub (3) gemäß Anspruch 3, **dadurch gekennzeichnet, dass** das Modulationsverfahren Amplituden-, Frequenz- oder Phasenmodulation einer Trägerfrequenz beinhaltet.

5. Sensor-Hub (3) gemäß einem der Ansprüche 1 bis 4, **dadurch**
**gekennzeichnet, dass** die Kommunikationsschnittstelle (7) zum Master-Gerät (1) eine RS485-Schnittstelle ist.

6. Sensor-Hub (3) gemäß einem der Ansprüche 1 bis 5, **dadurch**
**gekennzeichnet, dass** der mindestens eine Sensor (4, 12, 16), der mit dem Sensor-Hub (3) verbunden ist, einen der folgenden Sensoren beinhaltet:
einen Erschütterungs- oder Vibrationssensor, einen Positionssensor (Kodierer), einen Drehmomentsensor, einen Temperatursensor, einen Motor-Bremssystem-Sensor.

7. Sensor-Hub (3) gemäß einem der Ansprüche 1 bis 6, **dadurch**
**gekennzeichnet, dass** das Master-Gerät (1) ein unabhängiges Gerät ist oder in ein Positionssensor-Steuergerät oder einen Motorantrieb (2) einer Servomotoranordnung integriert ist.

8. Sensor-Hub (3) gemäß einem der Ansprüche 1 bis 7, **dadurch**
**gekennzeichnet, dass** der Sensor-Hub (3) dazu ausgelegt ist, bei einer bestehenden Servomotoranordnung nachgerüstet zu werden und an ein bestehendes Kabel (6, 14) angeschlossen zu werden.

9. Verfahren zum zustandsbasierten Überwachen und zur vorausschauenden Wartung von Motoren, Zahnrädern und Maschinen unter der Verwendung des Sensor-Hubs (3) gemäß einem der Ansprüche 1 bis 8.

## Revendications

1. Plateforme ouverte de concentrateur de capteur (3) pour un ensemble servomoteur, comprenant
au moins une interface de communication de capteur (8) pour communiquer avec au moins un capteur ou encodeur (4, 12, 16),
un dispositif informatique (26) d'évaluation et/ou de traitement et/ou de conversion de données acquises à partir de l'au moins un capteur ou encodeur (4, 12, 16), et
une interface de communication (7) pour communiquer au moins avec un dispositif maître (1), dans laquelle le concentrateur de capteur (3) et le dispositif maître (1) peuvent être connectés via un seul câble (6, 14), **caractérisée en ce que** l'interface de communication (7) avec le dispositif maître (1) est conçue pour fournir une transmission de données en temps réel de données de position d'un premier encodeur (5) et d'encodeurs supplémentaires (12) ou de données de capteurs supplémentaires (4, 13) dans un seul cycle de commande de moteur, et dans laquelle l'interface de communication de capteur (8) est conçue pour fournir une acquisition de données synchrone d'au moins un capteur (4, 16) et d'au moins un encodeur (5, 12).

2. Concentrateur de capteur (3) selon la revendication 1, **caractérisé en ce qu'**il est connecté en parallèle avec le premier encodeur (5) via l'interface de communication (7).

3. Concentrateur de capteur (3) selon l'une des revendications 1 et 2, **caractérisé en ce que** l'interface de communication (7) avec le dispositif maître (1) est conçue pour fournir une communication sur un câble d'alimentation électrique existant (6a) au moyen d'un procédé de modulation connu.

4. Concentrateur de capteur (3) selon la revendication 3, **caractérisé en ce que** le procédé de modulation comporte une modulation d'amplitude, de fréquence ou de phase d'une fréquence porteuse.

5. Concentrateur de capteur (3) selon l'une des revendications 1 à 4, **caractérisé en ce que** l'interface de communication (7) avec le dispositif maître (1) est une interface RS485.

6. Concentrateur de capteur (3) selon l'une des revendications 1 à 5, **caractérisé en ce que** l'au moins un capteur (4, 12, 16) connecté au concentrateur de capteur (3) comporte l'un des capteurs suivants : un capteur de choc ou de vibration, un capteur de position (encodeur), un capteur de couple, un capteur de température, un capteur de système de frein moteur.

7. Concentrateur de capteur (3) selon l'une des revendications 1 à 6, **caractérisé en ce que** le dispositif maître (1) est un dispositif indépendant ou est intégré au sein d'un dispositif de commande de capteur de position ou d'un entraînement moteur (2) d'un ensemble servomoteur.

8. Concentrateur de capteur (3) selon l'une des revendications 1 à 7, **caractérisé en ce que** le concentrateur de capteur (3) est conçu pour être monté ultérieurement dans un ensemble servomoteur existant et pour être connecté à un câblage existant (6, 14).

9. Procédé de surveillance d'état et de maintenance prédictive de moteurs, d'engrenages et de machines à l'aide d'un concentrateur de capteur (3) selon l'une des revendications 1 à 8.
